# EUROPÄISCHE PATENTSCHRIFT

(11) **EP 3 034 404 B1**
(45) Veröffentlichungstag und Bekanntmachung des Hinweises auf die Patenterteilung: **07.09.2022**
(21) Anmeldenummer: 15200841.3
(22) Anmeldetag: 17.12.2015
(51) Int. Cl.: B64D 11/06, B60N 3/06

(54) **SITZVORRICHTUNG**
SEATING DEVICE
SIEGE

(30) Priorität: 19.12.2014 DE 102014119264
(43) Veröffentlichungstag der Anmeldung: 22.06.2016
(73) Patentinhaber: Recaro Aircraft Seating GmbH & Co. KG, 74523 Schwäbisch Hall (DE)
(72) Erfinder: Mejuhas, Marsel, 74523 Schwäbisch Hall (DE); Horlacher, Michael, 74523 Schwäbisch Hall (DE); Erb, Andreas, 74523 Schwäbisch Hall (DE); Biemer, Regina, 74523 Schwäbisch Hall (DE)
(74) Vertreter: Daub, Thomas

(56) Entgegenhaltungen:
- EP-A1- 1 707 436
- WO-A1-2014/052534
- DE-A1-102008 022 417
- JP-A- 2004 243 801

## Beschreibung

Die Erfindung betrifft eine Sitzvorrichtung nach dem Oberbegriff des Patentanspruchs 1.

Es ist bereits eine Sitzvorrichtung, insbesondere eine Flugzeugsitzvorrichtung, mit einem Sitz und mit einer Fußstützvorrichtung, die wenigstens eine Trägerstruktur und ein über die Trägerstruktur an den Sitz angebundenes Fuß- und/oder Beinablageelement aufweist und dazu vorgesehen ist, für einen hinter dem Sitz angeordneten weiteren Sitz eine Bein-und/oder Fußablage bereitzustellen, vorgeschlagen worden, wobei die Trägerstruktur zur Ausbildung von zumindest zwei Funktionsstellungen der Fußstützvorrichtung dazu vorgesehen ist, zwischen zwei Hauptpositionen bewegbar zu sein. Die Druckschrift EP 1 707 436 A1 offenbart eine Flugzeugsitzvorrichtung, mit einem Sitz und mit einer Fußstützvorrichtung, die wenigstens eine Trägerstruktur und ein über die Trägerstruktur an den Sitz angebundenes Fuß- und/oder Beinablageelement aufweist, in das ein Passagier sein Bein oder seinen Fuß hineinstellen kann, und das dazu vorgesehen ist, für einen hinter dem Sitz angeordneten weiteren Sitz eine Bein- und/oder Fußablage bereitzustellen, wobei die Trägerstruktur zur Ausbildung von zumindest zwei Funktionsstellungen der Fußstützvorrichtung dazu vorgesehen ist, zwischen zwei Hauptpositionen bewegbar zu sein, wobei die Fußstützvorrichtung wenigstens ein Fußstützelement aufweist, das zumindest dazu vorgesehen ist, eine Abstützfläche für einen Fuß eines Passagiers bereitzustellen.

Die Druckschrift JP 2004 243801 A zeigt einen Kraftfahrzeugsitz mit einer Fußstützvorrichtung, die wenigstens eine Trägerstruktur aufweist, wobei die Trägerstruktur zur Ausbildung von zumindest zwei Funktionsstellungen der Fußstützvorrichtung dazu vorgesehen ist, zwischen zwei Hauptpositionen bewegbar zu sein, wobei die Fußstützvorrichtung wenigstens ein Fußstützelement aufweist, das zumindest dazu vorgesehen ist, eine Abstützfläche für einen Fuß eines Passagiers bereitzustellen, wobei die Trägerstruktur wenigstens einen Haltearm aufweist, der das Fußstützelement schwenkbar mit dem Sitz koppelt und das Fußstützelement rotatorisch an den Haltearm angebunden ist.

Die Druckschrift DE 10 2008 022417 A1 zeigt einen Kraftfahrzeugsitz mit einer Fußstützvorrichtung, die wenigstens eine Trägerstruktur aufweist, wobei die Fußstützvorrichtung wenigstens ein Fußstützelement aufweist, das zumindest dazu vorgesehen ist, eine Abstützfläche für einen Fuß eines Passagiers bereitzustellen.

Die Druckschrift WO 2014052534 A zeigt eine Fußstützvorrichtung für ein Kraftfahrzeug, die wenigstens eine Trägerstruktur aufweist, wobei die Fußstützvorrichtung wenigstens ein Fußstützelement aufweist, das zumindest dazu vorgesehen ist, eine Abstützfläche für einen Fuß eines Passagiers bereitzustellen.

Die Aufgabe der Erfindung besteht insbesondere darin, eine gattungsgemäße Vorrichtung mit verbesserten Eigenschaften hinsichtlich eines Komforts für einen Passagier bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Flugzeugsitzvorrichtung, mit einem Sitz und mit einer Fußstützvorrichtung, die wenigstens eine Trägerstruktur und ein über die Trägerstruktur an den Sitz angebundenes Fuß- und/oder Beinablageelement aufweist, in das ein Passagier sein Bein oder seinen Fuß hineinstellen kann, und dazu vorgesehen ist, für einen hinter dem Sitz angeordneten weiteren Sitz eine Bein-und/oder Fußablage bereitzustellen, wobei die Trägerstruktur zur Ausbildung von zumindest zwei Funktionsstellungen der Fußstützvorrichtung dazu vorgesehen ist, zwischen zwei Hauptpositionen bewegbar zu sein, wobei die Fußstützvorrichtung wenigstens ein Fußstützelement aufweist, das zumindest dazu vorgesehen ist, eine Abstützfläche für einen Fuß eines Passagiers bereitzustellen, wobei das Fuß- und/oder Beinablageelement an das Fußstützelement angebunden ist, wobei das Fuß- und/oder Beinablageelement dazu vorgesehen ist, über wenigstens ein Formschlusselement an den Sitz und/oder das Fußstützelement angebunden zu werden, wobei das Fußstützelement aus einem festen und biegesteifen Material gebildet ist, wobei die Trägerstruktur wenigstens einen Haltearm aufweist, der das Fußstützelement schwenkbar mit dem Sitz koppelt und wobei das Fußstützelement rotatorisch an den Haltearm angebunden ist.

Unter einer "Sitzvorrichtung" soll dabei insbesondere eine Vorrichtung verstanden werden, die zumindest einen Teil eines Sitzes, insbesondere zumindest einen Teil eines Flugzeugsitzes, ausbildet. Unter einem "Sitz" soll dabei insbesondere ein Flugzeugsitz verstanden werden, der dazu vorgesehen ist, in einer Flugzeugkabine aufgeständert zu werden und einen Sitzplatz für einen Passagier eines Flugzeugs bereitzustellen. Unter einem "Fuß- und/oder Beinablageelement" soll dabei insbesondere ein Element verstanden werden, in das ein Passagier sein Bein oder seinen Fuß hineinstellen und auf dem der Passagier seinen Fuß oder sein Bein ablegen kann. Dabei ist das Fuß- und/oder Beinablageelement vorzugsweise als ein Fußnetz ausgebildet. Unter einer "Funktionsstellung" soll dabei insbesondere eine Stellung der Fußstützvorrichtung verstanden werden, in der die Fußstützvorrichtung von einer Person zur Benutzung oder zum Verstauen gebracht werden kann. Dabei sind verschiedene Funktionsstellungen vorzugsweise als eine Verstaustellung oder eine Gebrauchsstellung ausgebildet. Unter einer "Verstaustellung" soll dabei insbesondere eine Stellung der Fußstützvorrichtung verstanden werden, in der die Fußstützvorrichtung vorzugsweise platzsparend und nicht störend für einen Passagier an der Sitzvorrichtung angeordnet ist, wobei die Fußstützvorrichtung dabei vorzugsweise eng an der Sitzvorrichtung anliegt. Unter einer "Gebrauchsstellung" soll dabei insbesondere eine Stellung der Fußstützvorrichtung verstanden werden, in der die Fußstützvorrichtung von einem Passagier in einer vorgesehenen Weise genutzt werden kann, wobei die Fußstützvorrichtung dabei vorzugsweise zumindest teilweise von der Sitzvorrichtung wegbewegt ist und ein Passagier seinen Fuß und/oder sein Bein auf der Fußstützvorrichtung ablegen kann. Dabei kann die Fußstützvorrichtung mehrere Gebrauchsstellungen aufweisen, wobei die unterschiedlichen Gebrauchsstellungen beispielsweise unterschiedlichen Schwenkwinkeln entsprechen, in denen die Fußstützvorrichtung ausgerichtet ist. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Fußstützelement" soll dabei insbesondere ein Element verstanden werden, das dazu vorgesehen ist, eine Abstützfläche für einen Fuß eines Passagiers bereitzustellen, wobei das Element aus einem festen und biegesteifen Material gebildet ist. Dabei kann ein Passagier, ohne dass er das Fußstützelement verformt, seinen Fuß darauf abstützen. Dadurch kann eine besonders vorteilhafte Fußstützvorrichtung bereitgestellt werden, die die Vorteile eines Fuß- und/oder Beinablageelements und eines Fußstützelements vorteilhaft kombiniert.

Weiter wird vorgeschlagen, dass die eine erste Funktionsstellung als eine Verstaustellung und eine zweite Funktionsstellung als eine Gebrauchsstellung ausgebildet ist. Dadurch kann die Fußstützvorrichtung für einen Passagier vorteilhaft zwischen einer Stellung, in der die Fußstützvorrichtung von dem Passagier genutzt wird, und einer Stellung, in der die Fußstützvorrichtung nicht von dem Passagier genutzt wird und dabei platzsparend an der Sitzvorrichtung angebracht ist, verschwenkt werden.

Unter einem "Haltearm" soll dabei insbesondere ein Teil der Trägerstruktur der Fußstützvorrichtung verstanden werden, der vorzugsweise aus einem einzelnen Element gebildet ist, das vorzugsweise stabförmig ausgebildet und dazu vorgesehen ist, Kräfte, die in einem Betrieb auf die Fußstützvorrichtung aufgebracht werden, an den Sitz weiterzuleiten. Grundsätzlich ist es auch denkbar, dass der Haltearm aus mehreren Elementen gebildet ist, die teleskopartig ausgefahren werden können oder ausklappbar sind. Dadurch kann die Fußstützvorrichtung besonders einfach und platzsparend an den Sitz angebunden werden. Der Haltearm ist vorzugsweise an einem ersten Ende schwenkbar an dem Sitz gelagert, wobei das Fußstützelement vorzugsweise an einem zweiten Ende des Haltearms angeordnet ist. Vorzugsweise ist das Fußstützelement relativ zum Haltearm beweglich an demselben gelagert.

Ganz besonders bevorzugt weist die Trägerstruktur nur einen einzelnen Haltearm auf. Der Haltearm ist dabei vorzugsweise, in Querrichtung eines Sitzbodens des Sitzes betrachtet, an welchem der Haltearm befestigt ist, im mittleren Bereich des Sitzes angeordnet.

Unter "rotatorisch an den Haltearm angebunden" soll dabei insbesondere verstanden werden, dass das Fußstützelement um eine Schwenkachse drehbar zu dem Haltearm gelagert ist, wobei die Schwenkachse dabei vorzugsweise parallel zu einer Haupterstreckung des Fußstützelements verläuft. Dadurch kann ein Passagier das Fußstützelement einfach in eine für ihn angenehme Position bringen, wodurch insbesondere ein Komfort für den Passagier erhöht wird.

Ferner wird vorgeschlagen, dass das Fuß- und/oder Beinablageelement an ein vorderes Ende des Fußstützelements angebunden ist. Unter einem "vorderen Ende des Fußstützelements" soll dabei insbesondere ein Ende des Fußstützelements verstanden werden, das dem Sitz, an dem es befestigt ist, zugewandt ist. Dadurch können das Fuß- und/oder Beinablageelement und das Fußstützelement besonders einfach und vorteilhaft miteinander gekoppelt werden.

Weiter wird vorgeschlagen, dass der Haltearm in wenigstens zwei Stellungen arretierbar ist. Unter "arretierbar" soll dabei insbesondere verstanden werden, dass der Haltearm in den entsprechenden Stellungen fest angeordnet ist und lediglich durch eine Entriegelung aus der Stellung verfahren werden kann. Dabei kann eine Entriegelung durch eine spezielle Entriegelbewegung oder durch Aufbringen einer Kraft, die größer ist als eine im Normalbetrieb wirkende Kraft, ausgelöst werden. Eine Entriegelbewegung aus einer arretierten Stellung erfolgt dabei vorzugsweise durch eine leichte Bewegung entgegen der gewünschten Schwenkrichtung. Dadurch kann der Passagier die Fußstützvorrichtung einfach in der von ihm gewünschten Stellung halten, wodurch ein Bedienkomfort erhöht wird.

Ferner wird vorgeschlagen, dass das Fuß- und/oder Beinablageelement dazu vorgesehen ist, abnehmbar an die Fußstützvorrichtung montierbar zu sein. Unter "abnehmbar montierbar" soll dabei insbesondere verstanden werden, dass das Fuß- und/oder Beinablageelement separat und einzeln von einer voll montierten Fußstützvorrichtung demontierbar ist. Dabei kann eine Montage oder Demontage des Fuß- und/oder Beinablageelements vorzugsweise ohne die vorherige Demontage von weiteren Elementen der Fußstützvorrichtung erfolgen. Dabei weist das Fuß- und/oder Beinablageelement zur Montage vorzugsweise mehrere Formschlusselemente auf, über die das Fuß- und/oder Beinablageelement mit dem Fußstützelement und/oder dem Sitz verbindbar ist. Dabei sind die Formschlusselemente des Fuß- und/oder Beinablageelements vorzugsweise von Kedern gebildet, die zur Befestigung an dem Fußstützelement oder dem Sitz in als Hinterschnitte ausgebildete Formschlusselemente geführt sind. Grundsätzlich sind auch andere Formschlusselemente denkbar, mittels denen das Fuß- und/oder Beinablageelement mit dem Fußstützelement und/oder dem Sitz verbunden ist, wie beispielsweise Flausch- und Hakenbänder oder Druckknöpfe. Dadurch kann das Fuß- und/oder Beinablageelement besonders vorteilhaft an die Fußstützvorrichtung angebunden werden und insbesondere vorteilhaft zu Reinigungszwecken ausgewechselt werden.

Unter einem "Formschlusselement" soll dabei insbesondere ein Element verstanden werden, das durch eine formschlüssige Verbindung mit einem korrespondierend ausgebildeten Formschlusselement zur Verbindung zweier Elemente vorgesehen ist. Dadurch kann das Fuß- und/oder Beinablageelement besonders einfach und vorteilhaft auswechselbar angebunden werden.

Ferner wird vorgeschlagen, dass der Sitz ein vorderes Querelement aufweist, an dem die Fußstützvorrichtung angebunden ist. Unter einem "vorderen Querelement" soll dabei insbesondere ein Element verstanden werden, das sich an einem in Sitzrichtung gesehen vorderen Ende des Sitzes in einer Querrichtung des Sitzes erstreckt. Dabei ist das vordere Querelement vorzugsweise als eine vordere Gepäckstange oder ein vorderes Tragrohr ausgebildet. Dabei ist es grundsätzlich auch denkbar, dass das vordere Querelement als ein anderes Bauteil des Sitzes ausgebildet ist, das an einem vorderen Ende des Sitzes angeordnet ist, wie beispielsweise ein Sitzboden. Unter "angebunden" soll dabei insbesondere in einem montierten Zustand über eine form- und oder kraftschlüssige Verbindung fest verbunden verstanden werden. Dadurch kann die Fußstützvorrichtung besonders vorteilhaft an die Sitzvorrichtung angebunden werden.

Es wird weiterhin vorgeschlagen, dass die Fußstützvorrichtung federnd an dem vorderen Querelement gelagert ist. Unter "federnd gelagert" soll dabei insbesondere verstanden werden, dass die Lagerung der Fußstützvorrichtung eine Rückstellkraft aufweist, die die Fußstützvorrichtung in eine Funktionsstellung, vorzugsweise in die als Verstaustellung ausgebildete Funktionsstellung, drückt. Dadurch kann besonderes vorteilhaft eine Lagerung für die Fußstützvorrichtung bereitgestellt werden, über die bei einer Verstellung aus der Ruhestellung eine Rückstellkraft erzeugt wird, durch die die Fußstützvorrichtung vorteilhaft selbsttätig in die Ruhestellung zurückgedrückt wird.

Des Weiteren wird vorgeschlagen, dass die Sitzvorrichtung wenigstens ein Anbindungselement aufweist, das die Trägerstruktur der Fußstützvorrichtung an das vordere Querelement anbindet. Unter einem "Anbindungselement" soll dabei insbesondere ein Element verstanden werden, über das die Trägerstruktur fest mit dem Querelement verbunden ist, wobei das Anbindungselement vorzugsweise kraft- und/oder formschlüssig mit dem vorderen Querelement verbunden ist und die Trägerstruktur kraft- und/oder formschlüssig mit dem Anbindungselement verbunden ist. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Dadurch kann die Trägerstruktur besonders vorteilhaft an den Sitz angebunden werden.

Ferner wird vorgeschlagen, dass das Anbindungselement die Trägerstruktur der Fußstützvorrichtung drehfest an das vordere Querelement anbindet. Unter "drehfest angebunden" soll dabei insbesondere verstanden werden, dass die Trägerstruktur in einem über das Anbindungselement an dem vorderen Querelement befestigten Zustand nicht zu dem Querelement verdreht werden kann, also dass zwischen dem vorderen Querelement und dem Anbindungselement ein Moment übertragen werden kann. Dadurch kann die Trägerstruktur und damit die Fußstützvorrichtung besonders vorteilhaft an den Sitz angebunden werden.

Zudem wird vorgeschlagen, dass die Trägerstruktur wenigstens ein Rahmenelement aufweist, das zumindest teilweise aus einem federelastischen Material gebildet ist. Unter einem "Rahmenelement aus einem federelastischen Material" soll dabei insbesondere ein Element verstanden werden, das zumindest einen Teil der Trägerstruktur ausbildet und dabei zumindest teilweise aus einem Material gebildet ist, das federelastische Eigenschaften aufweist, also bei einer elastischen Verformung eine Rückstellkraft erzeugt, die der vorausgegangenen Verformung entgegenwirkt, wodurch eine Rückstellung des Rahmenelements in eine Grundstellung erreicht werden kann. Dadurch kann eine Rückstellkraft zur Erzeugung der federnden Lagerung besonders einfach und vorteilhaft erreicht werden.

Es wird weiter vorgeschlagen, dass die Fußstützvorrichtung dazu vorgesehen ist, nachrüstbar an den Sitz anbringbar zu sein. Unter "nachrüstbar" soll dabei insbesondere an einen fertig montierten Sitz anbringbar verstanden werden. Dabei ist es vorzugsweise möglich, die Fußstützvorrichtung ohne teilweise Demontage des Sitzes an den in dem Flugzeug montierten Sitz zu montieren. Dadurch kann die Sitzvorrichtung besonders einfach ausgetauscht werden und insbesondere vorteilhaft auch zur Nachrüstung für Sitze, die ohne die Sitzvorrichtung ausgeliefert worden sind, verwendet werden.

Die erfindungsgemäße Sitzvorrichtung soll hierbei nicht auf die oben beschriebene Anwendung und Ausführungsform beschränkt sein. Insbesondere kann die erfindungsgemäße Sitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer erfindungsgemäßen Sitzvorrichtung in einem ersten Ausführungsbeispiel mit einer Fußstützvorrichtung in einer als Gebrauchsstellung ausgebildeten Funktionsstellung,
- Fig. 2: eine schematische Darstellung der Sitzvorrichtung mit der Fußstützvorrichtung in einer als Verstaustellung ausgebildeten Funktionsstellung,
- Fig. 3: eine Schnittansicht durch die Sitzvorrichtung mit der Fußstützvorrichtung, dargestellt in der als Gebrauchsstellung ausgebildeten Funktionsstellung und der als Verstaustellung ausgebildeten Funktionsstellung,
- Fig. 4: eine Detailansicht eines Fußstützelements und eines Haltearms der Fußstützvorrichtung,
- Fig. 5: eine Seitenansicht der Sitzvorrichtung mit einer Fußstützvorrichtung und einem Passagier, der seinen Fuß auf dem Fußstützelement abstützt,
- Fig. 6: eine Seitenansicht der Sitzvorrichtung mit einer Fußstützvorrichtung und einem Passagier, der seinen Fuß in ein Fuß- und/oder Beinablageelement der Fußstützvorrichtung legt,
- Fig. 7: eine Seitenansicht der Sitzvorrichtung mit einer Fußstützvorrichtung und einem Passagier, der seinen Fuß in das Fuß- und/oder Beinablageelement der Fußstützvorrichtung legt und dabei sein Bein an dem gedrehten Fußstützelement abstützt,
- Fig. 8: eine schematische Darstellung einer Sitzvorrichtung in einem nicht erfindungsgemäßen Beispiel mit einer Fußstützvorrichtung in einer als Gebrauchsstellung ausgebildeten Funktionsstellung und
- Fig. 9: eine schematische Darstellung einer Sitzvorrichtung in einem nicht erfindungsgemäßen Beispiel mit einer Fußstützvorrichtung in einer als Gebrauchsstellung ausgebildeten Funktionsstellung.

### Beschreibung der Ausführungsbeispiele

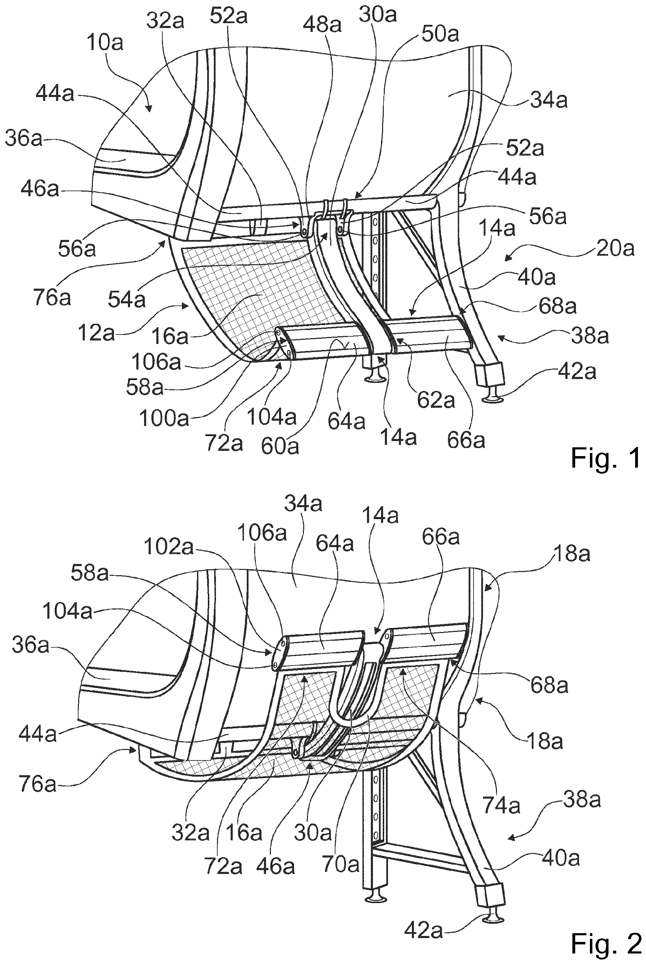

In den Figuren 1 bis 7 ist ein erstes Ausführungsbeispiel einer erfindungsgemäßen Sitzvorrichtung dargestellt. Die Sitzvorrichtung ist als eine Flugzeugsitzvorrichtung ausgebildet. Die als Flugzeugsitzvorrichtung ausgebildete Sitzvorrichtung ist Teil eines Sitzes 10a. Der Sitz 10a ist dabei als ein Flugzeugsitz ausgebildet. Der als Flugzeugsitz ausgebildete Sitz 10a ist in einem montierten Zustand auf einem Kabinenboden einer Flugzeugkabine eines Flugzeugs aufgeständert und dazu vorgesehen, dass ein Passagier während eines Flugs auf ihm sitzt. Grundsätzlich ist es auch denkbar, dass die Sitzvorrichtung als ein Teil eines anderen Sitzes 10a, wie beispielsweise eines Passagiersitzes eines Busses oder Zugs, ausgebildet ist. Der Sitz 10a umfasst eine Rückenlehne 34a und einen mit der Rückenlehne 34a gekoppelten Sitzboden 36a. Der Sitzboden 36a ist dabei im Wesentlichen parallel zu dem Kabinenboden ausgerichtet. Die Rückenlehne 34a ist im Wesentlichen senkrecht zu dem Sitzboden 36a ausgerichtet. Dabei ist die Rückenlehne 34a an einem hinteren Ende des Sitzbodens 36a angeordnet. Der Sitzboden 36a und die Rückenlehne 34a sind dabei vorzugsweise schwenkbar zueinander ausgebildet. Der Sitzboden 36a und die Rückenlehne 34a können zu dem Kabinenboden verschwenkt werden. Der Sitz 10a weist eine Aufständereinheit 38a auf, mittels der der Sitz 10a auf dem Kabinenboden aufgeständert ist. Der Sitz 10a ist dabei Teil einer Sitzreihe, die aus drei nebeneinander angeordneten, als Flugzeugsitzen ausgebildeten Sitzen 10a gebildet ist, die über dieselbe Aufständereinheit 38a auf dem Kabinenboden aufgeständert sind. Grundsätzlich ist es auch denkbar, dass der Sitz 10a als ein einzelner Sitz 10a ausgebildet ist oder als ein Teil einer Sitzreihe mit einer anderen Zahl an Sitzen 10a. Die Aufständereinheit 38a zur Aufständerung des Sitzes 10a umfasst mehrere Standbeine 40a, die in einem in der Flugzeugkabine montierten Zustand des Sitzes 10a über Verbindungselemente 42a fest mit dem Kabinenboden verbunden sind. Der Sitz 10a umfasst ein vorderes Querelement 22a, das als ein vorderes Tragrohr ausgebildet ist, und ein hinteres Querelement 44a, das als ein hinteres Tragrohr ausgebildet ist. Die beiden als Tragrohre ausgebildeten Querelemente 22a, 44a sind starr mit der Aufständereinheit 38a verbunden. Die beiden als Tragrohre ausgebildeten Querelemente 22a, 44a sind dabei als Hohlrohre ausgebildet und erstrecken sich über eine gesamte Breite der Sitzreihe. Grundsätzlich ist es natürlich auch denkbar, dass die als Tragrohre ausgebildeten Querelemente 22a, 44a in einer anderen Art und Weise ausgebildet sind. Das als vorderes Tragrohr ausgebildete Querelement 22a ist dabei an einer Vorderseite des Sitzes 10a angeordnet und erstreckt sich quer zu einer Sitzrichtung des Sitzes 10a. Das als hinteres Tragrohr ausgebildete hintere Querelement 44a ist an einer Rückseite des Sitzes 10a angeordnet. Dabei sind die als Tragrohre ausgebildeten Querelemente 22a, 44a unterhalb des Sitzbodens 36a angeordnet. Über nicht näher dargestellte Verbindungselemente ist der Sitzboden 36a mit den als Tragrohren ausgebildeten Querelementen 22a, 44a verbunden.

Die Sitzvorrichtung umfasst eine Fußstützvorrichtung 12a. Die Fußstützvorrichtung 12a ist dazu vorgesehen, eine Bein- und/oder Fußablage für einen Passagier bereitzustellen. Dabei ist die Fußstützvorrichtung 12a an den als Flugzeugsitz ausgebildeten Sitz 10a angebunden. Die Fußstützvorrichtung 12a ist dabei nachrüstbar an dem Sitz 10a anbringbar. Die Fußstützvorrichtung 12a ist dazu vorgesehen, eine Fuß- und/oder Beinablage für einen hinter dem Sitz 10a, an dem die Fußstützvorrichtung 12a angebunden ist, angeordneten Sitz bereitzustellen. Ein auf dem hinteren Sitz sitzender Passagier kann auf der Fußstützvorrichtung 12a, die an dem vor ihm angeordneten Sitz 10a angebunden ist, seine Beine und/oder Füße abstützen. Die Fußstützvorrichtung 12a umfasst eine Trägerstruktur 14a. Die Trägerstruktur 14a ist zur Ausbildung von zumindest zwei Funktionsstellungen 18a, 20a der Fußstützvorrichtung 12a dazu vorgesehen, zwischen zwei Hauptpositionen bewegbar zu sein. Dabei bildet die erste Hauptposition der Trägerstruktur 14a die erste Funktionsstellung 18a der Fußstützvorrichtung 12a aus. Eine zweite Hauptstellung der Trägerstruktur 14a bildet die zweite Funktionsstellung 20a der Fußstützvorrichtung 12a aus. Dabei ist eine erste Funktionsstellung 18a der Fußstützvorrichtung 12a als eine Verstaustellung ausgebildet. In der Verstaustellung (siehe Figur 2) ist die Fußstützvorrichtung 12a möglichst nah am Sitz 10a angeordnet und gibt einen Fußraum unter dem Sitz 10a frei. Dabei ist die Fußstützvorrichtung 12a in der als Verstaustellung ausgebildeten ersten Funktionsstellung 18a an eine Unter- und eine Rückseite des Sitzes 10a angeklappt. Die zweite Funktionsstellung 20a ist als eine Gebrauchsstellung ausgebildet. In der als Gebrauchsstellung ausgebildeten Funktionsstellung 20a ist die Fußstützvorrichtung 12a von dem Sitz 10a weggeklappt und kann von einem Passagier zur Bein-und/oder Fußauflage verwendet werden. In der als Gebrauchsstellung ausgebildeten Funktionsstellung 20a ist die Fußstützvorrichtung 12a dazu vorgesehen, dass ein Passagier seine Beine in der Fußstützvorrichtung 12a ablegen oder seine Füße an der Fußstützvorrichtung 12a abstützen kann.

Die Trägerstruktur 14a umfasst einen einzelnen Haltearm 30a. Der Haltearm 30a ist an einem ersten Ende verschwenkbar mit dem Sitz 10a gekoppelt, wobei an einem zweiten Ende des Haltearms 30a ein Fußstützelement 58a der Fußstützvorrichtung 12a angeordnet ist. Der Haltearm 30a ist, in Querrichtung eines Sitzbodens des Sitzes 10a betrachtet, im mittleren Bereich des Sitzes 10a angeordnet.

Der Haltearm 30a ist über eine Schwenklagerung 46a mit dem als hinteres Tragrohr ausgebildeten hinteren Querelement 44a verbunden. Grundsätzlich ist es auch denkbar, dass der Haltearm 30a an dem Sitzboden 36a, der Rückenlehne 34a oder einer nicht näher dargestellten Konsole des Sitzes 10a angebunden ist. Eine Anbindung kann dabei äquivalent zu der beschriebenen Lagerung ausgebildet sein, aber auch andere, dem Fachmann als sinnvoll erscheinende Lagerungen umfassen. Dabei ist der Haltearm 30a in wenigstens zwei Stellungen arretierbar. Eine erste Stellung, in der der Haltearm 30a arretierbar ist, bildet die erste Hauptstellung der Trägerstruktur 14a aus. Dadurch bildet die erste Stellung des Haltearms 30a die als Verstaustellung ausgebildete Funktionsstellung 18a der Fußstützvorrichtung 12a aus. Eine zweite Stellung, in der der Haltearm 30a arretierbar ist, bildet die zweite Hauptstellung der Trägerstruktur 14a aus. Dadurch bildet die zweite Stellung des Haltearms 30a die als Gebrauchsstellung ausgebildete Funktionsstellung 20a der Fußstützvorrichtung 12a aus. Grundsätzlich ist es auch denkbar, dass der Haltearm 30a in weiteren Stellungen arretierbar ist, wobei die weiteren Stellungen dann weitere Hauptstellungen der Trägerstruktur 14a und damit weitere Gebrauchsstellungen der Fußstützvorrichtung 12a ausbilden würden. Die Schwenklagerung 46a, mittels der der Haltearm 30a schwenkbar gelagert ist, umfasst einen Grundkörper 48a. Der Grundkörper 48a ist über Befestigungselemente 50a mit dem hinteren Querelement 44a drehfest verbunden. Die Befestigungselemente 50a sind dabei als Kabelbinder ausgebildet, die das hintere Querelement 44a in einem montierten Zustand umschlingen. Grundsätzlich ist es auch denkbar, dass der Grundkörper 48a über anders ausgebildete Befestigungselemente starr und drehfest mit dem hinteren Querelement 44a verbunden ist. Es ist grundsätzlich auch denkbar, dass der Grundkörper 48a der Schwenklagerung 46a stoffschlüssig, beispielsweise durch eine Klebung, eine Nietverbindung oder eine Schweißung, starr mit dem hinteren Querelement 44a verbunden ist. Der Grundkörper 48a weist eine U-förmige Grundform auf. Der Grundkörper 48a weist zwei beabstandet zueinander angeordnete Seitenwände 52a auf, die in ihrem Zwischenraum einen Aufnahmebereich 54a für den Haltearm 30a ausbilden. Die beiden Seitenwände 52a weisen jeweils eine Aufnahme 56a auf, in der ein Bolzen gelagert ist, über den der Haltearm 30a an den Grundkörper 48a angebunden ist. Der Haltearm 30a weist zur Anbindung über den Bolzen an seinem ersten Ende ein Durchgangsloch auf, durch das der Bolzen in einem montierten Zustand geführt ist. Dabei ist das erste Ende des Haltearms 30a in einem montierten Zustand in dem Aufnahmebereich 54a zwischen den beiden Seitenwänden 52a des Grundkörpers 48a angeordnet. Die Schwenklagerung 46a weist einen nicht näher dargestellten Arretierungsmechanismus auf, über den der Haltearm 30a in den unterschiedlichen Stellungen zu dem Sitz 10a arretiert werden kann. Die Fußstützvorrichtung 12a weist eine Verdrehsicherung 96a auf. Die Verdrehsicherung 96a ist dazu vorgesehen, die Schwenklagerung 46a und damit den Haltearm 30a verdrehsicher an dem hinteren Querelement 44a zu befestigen. Die Verdrehsicherung 96a weist dazu ein Abstützelement 98a auf. Das Abstützelement 98a ist mit einem ersten Ende starr mit dem Grundkörper 48a der Schwenklagerung 46a verbunden. Mit einem zweiten Ende ist das Abstützelement 98a mit dem vorderen Querelement 22a verbunden. Dabei ist das Abstützelement 98a starr mit dem vorderen Querelement 22a verbunden. Das Abstützelement 98a ist stabförmig ausgebildet. Ein über die Schwenklagerung 46a in das Abstützelement 98a der Verdrehsicherung 96a eingeleitetes Moment, welches durch einen Betrieb der Fußstützvorrichtung 12a entstehen kann, wird über das Abstützelement 98a an dem vorderen Querelement 22a abgestützt. Ein Verdrehen der Schwenklagerung 46a bzw. des Grundkörpers 48a der Schwenklagerung 46a auf dem Querelement 44a kann dadurch verhindert werden und eine korrekte Positionierung der Schwenklagerung 46a und dadurch des Haltearms 30a kann garantiert werden. Grundsätzlich wäre es auch denkbar, dass das Abstützelement 98a an einem anderen Bauteil des Sitzes 10a, wie beispielsweise dem Sitzboden 36a, der Rückenlehne 34a oder der Aufständereinheit 38a angebunden wäre.

Das Fußstützelement 58a der Fußstützvorrichtung 12a ist dazu vorgesehen, eine Abstützfläche 60a für die Füße des Passagiers bereitzustellen, dem die Fußstützvorrichtung 12a zugeordnet ist. Das Fußstützelement 58a ist an dem zweiten Ende des Haltearms 30a angebunden. Der Haltearm 30a koppelt das Fußstützelement 58a schwenkbar mit dem Sitz 10a. Das Fußstützelement 58a ist rotatorisch an den Haltearm 30a angebunden. Das Fußstützelement 58a ist dadurch drehbar zu dem Haltearm 30a gelagert und kann von einem Passagier einfach in eine für ihn komfortable Position gebracht werden. Das Fußstützelement 58a ist über eine Lagereinheit 62a mit dem zweiten Ende des Haltearms 30a verbunden. Die Lagereinheit 62a umfasst ein Durchgangsloch, das an dem zweiten Ende des Haltearms 30a angeordnet ist. Weiter umfasst die Lagereinheit 62a einen nicht näher dargestellten Bolzen, der durch das Durchgangsloch des Haltearms 30a geführt ist. Über den Bolzen ist das Fußstützelement 58a drehbar zu dem Haltearm 30a gelagert. Das Fußstützelement 58a weist dabei eine erste Seite 64a und eine zweite Seite 66a auf. Dabei ist die erste Seite 64a des Fußstützelements 58a auf einer Seite des Haltearms 30a angeordnet und die zweite Seite 66a auf einer gegenüberliegenden Seite. Dabei sind die zwei Seiten 64a, 66a des Fußstützelements 58a als separate Teile ausgebildet. Grundsätzlich ist es auch denkbar, dass das Fußstützelement 58a und damit die beiden Seiten 64a, 66a des Fußstützelements 58a einstückig ausgebildet ist bzw. sind. Die beiden Seiten 64a, 66a des Fußstützelements 58a weisen jeweils eine Aufnahme auf, über die die jeweilige Seite 64a, 66a über den Bolzen mit dem Haltearm 30a gekoppelt werden kann. Dabei sind die beiden Seiten 64a, 66a des Fußstützelements 58a über den Bolzen jeweils unabhängig voneinander zu dem Haltearm 30a verdrehbar. Es ist allerdings auch denkbar, dass die beiden Seiten 64a, 66a des Fußstützelements 58a miteinander gekoppelt sind und sich lediglich zusammen drehen lassen.

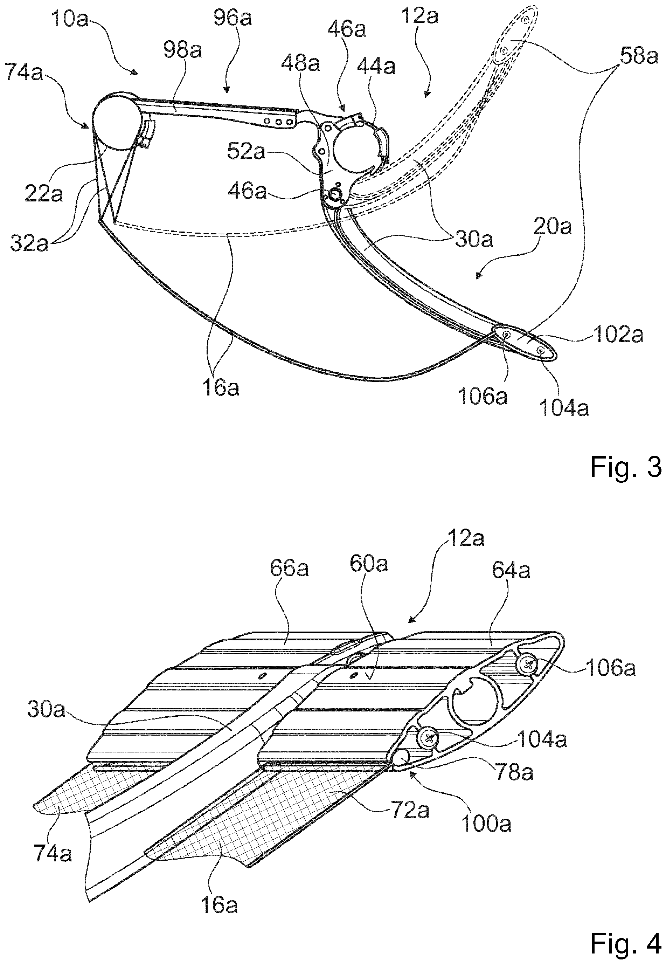

Die Fußstützvorrichtung 12a weist ein Fuß- und/oder Beinablageelement 16a auf. Das Fuß- und/oder Beinablageelement 16a ist über die Trägerstruktur 14a an den Sitz 10a angebunden. Das Fuß- und/oder Beinablageelement 16a ist dabei nachträglich an die Fußstützvorrichtung 12a anbringbar. Dadurch kann ein Wechsel des Fuß- und/oder Beinablageelements 16a, beispielsweise zur Reinigung, schnell und einfach erfolgen. Das Fuß- und/oder Beinablageelement 16a ist aus einem Netz gebildet. Das Fuß- und/oder Beinablageelement 16a ist als ein Fußnetz ausgebildet. Dabei ist es auch denkbar, dass das Fuß- und/oder Beinablageelement 16a aus einem anderen Material als einem Netz ausgebildet ist, beispielsweise aus einem Textil, das vorzugsweise nicht völlig blickdicht ausgebildet ist. Grundsätzlich ist es auch denkbar, dass das Fuß- und/oder Beinablageelement 16a aus einem anderen flexiblen, vorzugsweise dünnen Material gebildet ist, wie beispielsweise aus einer Kunststofffolie, einem Faserverbundwerkstoff, Leder oder einem anderen, dem Fachmann als sinnvoll erscheinenden flexiblen Material. Das Fuß- und/oder Beinablageelement 16a ist an einem vorderen Ende 68a des Fußstützelements 58a angebunden. Das vordere Ende 68a ist orthogonal zu der Sitzrichtung des Sitzes 10a ausgerichtet und in einem unverdrehten Zustand einem vorderen Ende des Sitzes 10a zugewandt. Dabei ist das Fuß- und/oder Beinablageelement 16a fest mit dem vorderen Ende des Fußstützelements 58a verbunden. Dabei weist das Fuß- und/oder Beinablageelement 16a an dem Ende, mit dem es an dem Fußstützelement 58a angebracht ist, eine Ausnehmung 70a auf, die mittig im Bereich des Haltearms 30a angeordnet ist. Die Ausnehmung 70a trennt einen ersten Anbindungsbereich 72a des Fuß- und/oder Beinablageelements 16a von einem zweiten Anbindungsbereich 74a des Fuß- und/oder Beinablageelements 16a ab. Die Anbindungsbereiche 72a, 74a sind jeweils zur festen Kopplung mit dem Fußstützelement 58a vorgesehen. Der erste Anbindungsbereich 72a ist fest mit der einen Seite 64a des Fußstützelements 58a verbunden. Der zweite Anbindungsbereich 74a ist fest mit der anderen, der einen Seite 64a gegenüberliegenden Seite 66a des Fußstützelements 58a verbunden. Dabei sind die Anbindungsbereiche 72a, 74a über eine Formschlussverbindung mit der jeweiligen Seite 64a, 66a des Fußstützelements 58a verbunden. Dabei ist das Fuß- und/oder Beinablageelement 16a lösbar mit dem Fußstützelement 58a verbunden. Die Anbindungsbereiche 72a, 74a weisen jeweils Formschlusselemente 78a auf, über die das Fuß- und/oder Beinablageelement 16a fest mit dem Fußstützelement 58a verbindbar ist. Die Formschlusselemente 78a der Anbindungsbereiche 72a, 74a sind als Keder ausgebildet. Zur Kopplung mit dem Fußstützelement 58a bilden die beiden Seiten 64a, 66a des Fußstützelements 58a jeweils ein Formschlusselement 100a aus. Die Formschlusselemente 100a sind als Schlitze ausgebildet, die einen Hinterschnitt aufweisen. Die Formschlusselemente 100a sind dabei zu einer Außenseite der beiden Seiten 64a, 66a des Fußstützelements 58a geöffnet. Dadurch können die als Keder ausgebildeten Formschlusselemente 78a der Anbindungsbereiche 72a, 74a seitlich in die Hinterschnitte der Formschlusselemente 100a eingeführt werden, wobei das Fuß-und/oder Beinablageelement 16a durch die Schlitze nach außen geführt ist. So sind die beiden Anbindungsbereiche 72a, 74a mit den beiden Seiten 64a, 66a des Fußstützelements 58a verbunden (siehe Figur 4). Zum Schließen der Formschlusselemente 100a weist das Fußstützelement 58a Abschlussplatten 102a auf. Die Abschlussplatten 102a sind in einem montierten Zustand seitlich an die Außenseiten der beiden Seiten 64a, 66a des Fußstützelements 58a angebunden. Dabei sind die Abschlussplatten 102a mit zwei Schraubenelementen 104a, 106a fest mit den beiden Seiten 64a, 66a des Fußstützelements 58a verschraubt. Grundsätzlich ist es auch denkbar, dass die Abschlussplatten 102a auf eine andere Art und Weise trennbar mit den beiden Seiten 64a, 66a des Fußstützelements 58a verbunden sind. In montiertem Zustand verschließen die Abschlussplatten 102a die Formschlusselemente 100a der beiden Seiten 64a, 66a des Fußstützelements 58a so, dass die als Keder ausgebildeten Formschlusselemente 78a verliersicher mit den beiden Seiten 64a, 66a des Fußstützelements 58a verbunden sind. In Figur 4 ist die eine Abschlussplatte 102a ausgeblendet um das als Keder ausgebildete Formschlusselement 78a und das Formschlusselement 100a besser zu zeigen. Grundsätzlich wäre es auch denkbar, dass die Formschlusselemente 78a als Flausch- und Hakenbänder ausgebildet sind. Grundsätzlich ist es auch denkbar, dass das Fuß- und/oder Beinablageelement 16a mit den Anbindungsbereichen 72a, 74a über eine andere geeignete Kraft- und/oder Formschlussverbindung mit der jeweiligen Seite 64a, 66a verbunden ist. Dabei ist es denkbar, dass die Anbindungsbereiche 72a, 74a zur Verbindung mit der jeweiligen Seite 64a, 66a des Fußstützelements 58a in eine Aufnahme der Seiten 64a, 66a geklemmt werden. Grundsätzlich ist es auch denkbar, dass die Anbindungsbereiche 72a, 74a jeweils fest über eine Stoffschlussverbindung, wie beispielsweise eine Klebeverbindung, mit dem Fußstützelement 58a verbunden sind.

Die Fußstützvorrichtung 12a ist an dem vorderen Querelement 22a angebunden. Die Fußstützvorrichtung 12a ist über das als vorderes Tragrohr ausgebildete vordere Querelement 22a mit dem Sitz 10a verbunden. Alternativ wäre es auch denkbar, dass die Fußstützvorrichtung 12a an ein anderes Element des Sitzes 10a angebunden ist, wie beispielsweise an den Sitzboden 36a, an ein Teil der Aufständereinheit 38a oder auch an ein anderes Zusatzbauteil, welches an das Querelement 22a angebunden ist. Dabei ist das Fuß- und/oder Beinablageelement 16a mit einem Ende an dem als vorderes Tragrohr ausgebildeten vorderen Querelement 22a angebracht, das dem Ende, mit dem das Fuß-und/oder Beinablageelement 16a mit dem Fußstützelement 58a verbunden ist, gegenüberliegt. Dabei weist das Fuß- und/oder Beinablageelement 16a an dem Ende, an dem es mit dem vorderen Querelement 22a verbunden ist, einen Anbindungsbereich 76a auf. Der Anbindungsbereich 76a weist ein Formschlusselement 32a auf, das als eine Schlaufe ausgebildet ist. Dabei umschließt das als Schlaufe ausgebildete Formschlusselement 32a in einem montierten Zustand das vordere Querelement 22a. Über das als Schlaufe ausgebildete Formschlusselement 32a ist das vordere Ende des Fuß- und/oder Beinablageelements 16a verdrehbar mit dem vorderen Querelement 22a verbunden. Dabei ist das Formschlusselement 32a durch lösbare Koppelstellen gebildet, über die das eine Ende des Fuß- und/oder Beinablageelements 16a an einer beabstandeten Stelle des Fuß-und/oder Beinablageelements 16a angebunden ist. Die Koppelstellen sind dabei von nicht näher dargestellten Formschlusselementen gebildet. Dabei sind die Koppelstellen insbesondere von Flausch- und Hakenbändern gebildet. Grundsätzlich sind auch andere Formschlusselemente denkbar, mittels denen das Fuß- und/oder Beinablageelement 16a lösbar mit dem vorderen Querelement 22a gekoppelt ist, wie beispielsweise mit Haken, verschiedenen Druckknöpfen, einem Reißverschluss, mit Karabinern oder mit Ringen, die das Querelement 22a umschließen. So kann das Fuß- und/oder Beinablageelement 16a einfach an das vordere Querelement 22a angebunden werden, wenn der Sitz 10a schon voll montiert ist. Dadurch und durch die Anbindung an das Fußstützelement 58a ist das Fuß- und/oder Beinablageelement 16a nachträglich an die Fußstützvorrichtung 12a anbindbar und dadurch leicht zu wechseln. Grundsätzlich ist es auch denkbar, dass das als Schlaufe ausgebildete Formschlusselement 32a durch eine Naht gebildet ist, die das Fuß- und/oder Beinablageelement 16a an dem vorderen Ende in Form einer Schlaufe zusammennäht. Dabei müsste das Fuß- und/oder Beinablageelement 16a zur Montage seitlich auf das Querelement 22a aufgezogen werden.

Im Folgenden sollen die beiden Funktionsstellungen 18a, 20a kurz näher beschrieben werden. Zur Erläuterung der Funktionsstellungen 18a, 20a der Fußstützvorrichtung 12a für den Passagier umfasst die Fußstützvorrichtung 12a ein Erklärungsschild, welches sichtbar für den Passagier an dem Sitz 10a angebracht ist. Das Erklärungsschild kann beispielsweise in der Form eines Aufklebers ausgebildet sein und entsprechende Informationen zum Gebrauch der Fußstützvorrichtung 12a aufweisen. In der als Verstaustellung ausgebildeten Funktionsstellung 18a der Fußstützvorrichtung 12a ist die Trägerstruktur 14a mit dem Haltearm 30a nach oben geklappt. Dabei liegen die Fußstützvorrichtung 12a, insbesondere der Haltearm 30a, das Fußstützelement 58a und das Fuß- und/oder Beinablageelement 16a, an der Rückseite der Rückenlehne 34a an (siehe Figur 2 und Figur 3). Dabei ist die Fußstützvorrichtung 12a so nicht von einem Passagier benutzbar und gibt einen Raum unter dem Sitz 10a frei, sodass hier beispielsweise Gepäck verstaut werden kann.

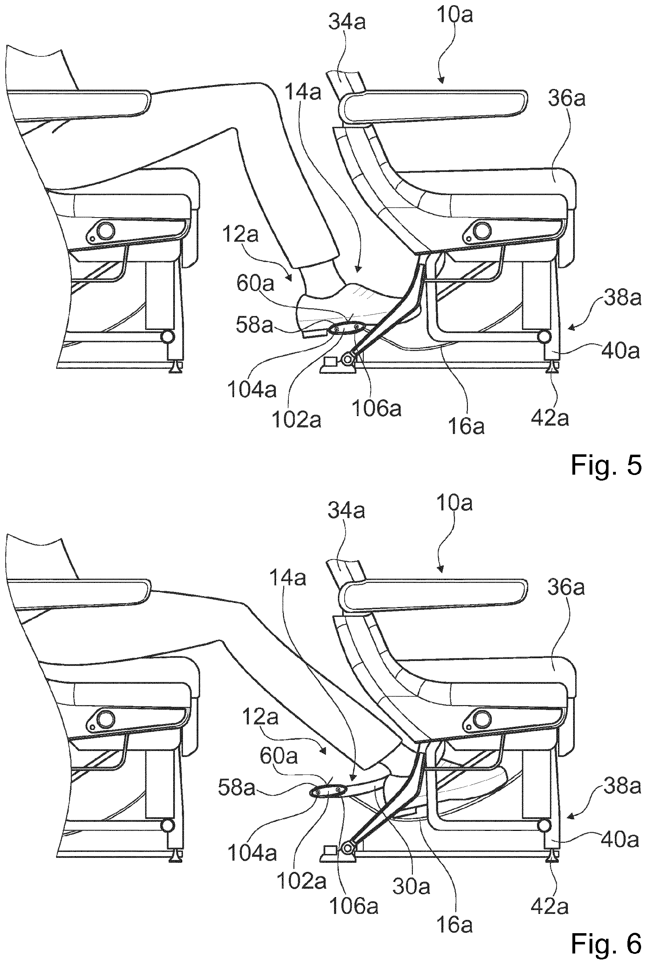

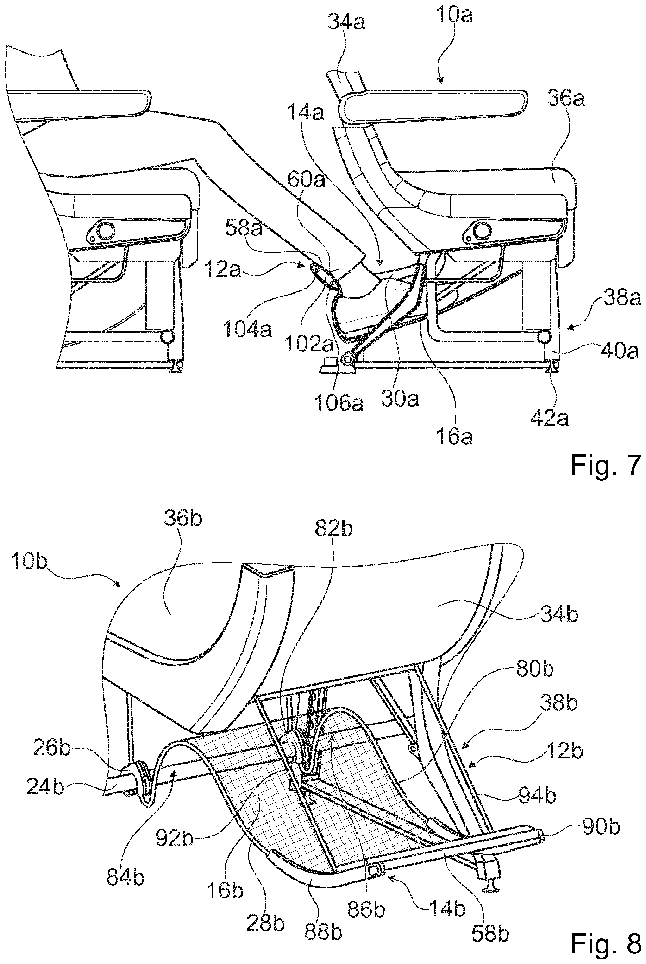

Zur Verstellung aus der als Verstaustellung ausgebildeten Funktionsstellung 18a in die als Gebrauchsstellung ausgebildete Funktionsstellung 20a wird der Haltearm 30a über die Schwenklagerung 46a nach unten in Richtung des Kabinenbodens verschwenkt. Dabei wird der Haltearm 30a in der einen Stellung arretiert, die die als Gebrauchsstellung ausgebildete Funktionsstellung 20a ausbildet. In dieser Stellung kann ein Passagier seine Füße auf dem Fußstützelement 58a abstützen oder seine Beine in das Fuß- und/oder Beinablageelement 16a ablegen. Dabei rotieren die Seiten 64a, 66a des Fußstützelements 58a so, dass sie sich mit ihrer Abstützfläche 60a dem Passagier anpassen. Um eine Länge des Fuß- und/oder Beinablageelements 16a anzupassen, kann das Fußstützelement 58a von dem Passagier so weit gedreht werden, dass sich das Fuß- und/oder Beinablageelement 16a um das Fußstützelement 58a wickelt und dadurch verkürzt wird. Figur 5 zeigt eine erste mögliche Position eines Fußes des Passagiers auf der Fußstützvorrichtung 12a. Die Fußstützvorrichtung 12a ist in die als Gebrauchsstellung ausgebildete Funktionsstellung 18a geschwenkt. Der Passagier hat seine Füße auf dem Fußstützelement 58a platziert. Dabei kann der Passagier das Fußstützelement 58a in eine von ihm gewünschte, komfortable Position rotieren. Alternativ könnte der Passagier, wie in Figur 6 gezeigt, seine Füße in das Fuß- und/oder Beinablageelement 16a einlegen. Das flexible Fuß- und/oder Beinablageelement 16a passt sich dabei an die Kontur der Füße an und der Passagier kann seine Füße komfortabel in dem Fuß- und/oder Beinablageelement 16a ablegen. Wie in Figur 7 zu sehen, kann der Passagier zur Unterstützung seiner Beine auch seine Waden an das Fußstützelement 58a anlegen und seine Füße in das Fuß-und/oder Beinablageelement 16a legen. Dabei rotiert das Fußstützelement 58a automatisch in eine Position, die sich den Waden des Passagiers anpasst. Der Haltearm 30a kann wie in den Figuren 5 bis 7 in unterschiedlichen Höhen arretiert werden, um Passagieren, die unterschiedlich groß sind, jeweils eine optimale Einstellmöglichkeit der Fußstützvorrichtung 12a zu ermöglichen.

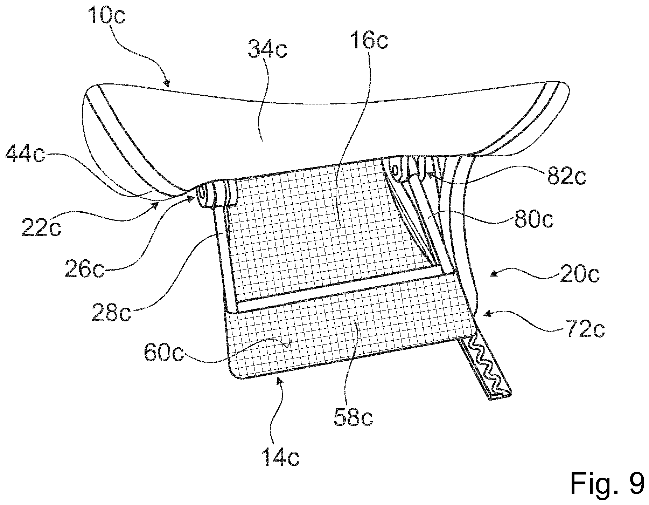

In Fig. 8 und 9 sind zwei nicht erfindungsgemäße Beispiele gezeigt. Die nachfolgenden Beschreibungen und die Zeichnungen beschränken sich im Wesentlichen auf die Unterschiede zwischen den Beispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Beispiele, insbesondere der Fig. 1 bis 7, verwiesen werden kann. Zur Unterscheidung der nicht erfindungsgemäße Beispiele ist der Buchstabe a den Bezugszeichen des Ausführungsbeispiels in Fig. 1 bis 7 nachgestellt. In den Beispielen der Fig. 8 und 9 ist der Buchstabe a durch die Buchstaben b und c ersetzt.

In der Figur 8 ist einer Sitzvorrichtung gezeigt. Die Sitzvorrichtung ist als eine Flugzeugsitzvorrichtung ausgebildet. Die als Flugzeugsitzvorrichtung ausgebildete Sitzvorrichtung ist Teil eines Sitzes 10b. Der Sitz 10b ist dabei als ein Flugzeugsitz ausgebildet. Der als Flugzeugsitz ausgebildete Sitz 10b ist in einem montierten Zustand auf einem Kabinenboden einer Flugzeugkabine eines Flugzeugs aufgeständert und dazu vorgesehen, dass ein Passagier während eines Flugs auf ihm sitzt. Der Sitz 10b umfasst eine Rückenlehne 34b und einen mit der Rückenlehne 34b gekoppelten Sitzboden 36b. Der Sitz 10b weist eine Aufständereinheit 38b auf, mittels der der Sitz 10b auf dem Kabinenboden aufgeständert ist. Der Sitz 10b umfasst ein vorderes Querelement 22b, das als ein vorderes Tragrohr ausgebildet ist, und ein hinteres Querelement 44b, das als ein hinteres Tragrohr ausgebildet ist. Die beiden als Tragrohre ausgebildeten Querelemente 22b, 44b sind starr mit der Aufständereinheit 38b verbunden. Die beiden als Tragrohre ausgebildeten Querelemente 22b, 44b sind dabei als Hohlrohre ausgebildet und erstrecken sich über eine gesamte Breite der Sitzreihe. Das als vorderes Tragrohr ausgebildete Querelement 22b ist dabei an einer Vorderseite des Sitzes 10b angeordnet und erstreckt sich quer zu einer Sitzrichtung des Sitzes 10b. Das als hinteres Tragrohr ausgebildete hintere Querelement 44b ist an einer Rückseite des Sitzes 10b angeordnet. Dabei sind die als Tragrohre ausgebildeten Querelemente 22b, 44b unterhalb des Sitzbodens 36b angeordnet. Die Sitzvorrichtung umfasst ein weiteres vorderes Querelement 24b. Das Querelement 24b ist als eine Gepäckstange ausgebildet. Das Querelement 24b erstreckt sich unterhalb des Sitzbodens 36b und ist nahe des Kabinenbodens angeordnet. Das als Gepäckstange ausgebildete Querelement 24b ist dazu vorgesehen, Gepäck daran zu hindern, unkontrolliert unterhalb des Sitzes 10b hindurchzurutschen.

Die Sitzvorrichtung umfasst eine Fußstützvorrichtung 12b. Die Fußstützvorrichtung 12b ist dazu vorgesehen, eine Bein- und/oder Fußablage für einen Passagier bereitzustellen. Dabei ist die Fußstützvorrichtung 12b an den als Flugzeugsitz ausgebildeten Sitz 10b angebunden. Die Fußstützvorrichtung 12b ist dazu vorgesehen, eine Fuß- und/oder Beinablage für einen hinter dem Sitz 10b, an dem Fußstützvorrichtung 12b angebunden ist, angeordneten Sitz bereitzustellen. Ein auf dem hinteren Sitz sitzender Passagier kann auf der Fußstützvorrichtung 12b, die an dem vor ihm angeordneten Sitz 10b angebunden ist, seine Beine und/oder Füße abstützen. Die Fußstützvorrichtung 12b umfasst eine Trägerstruktur 14b. Die Trägerstruktur 14b ist zur Ausbildung von zumindest zwei Funktionsstellungen 18b, 20b der Fußstützvorrichtung 12b dazu vorgesehen, zwischen zwei Hauptpositionen bewegbar zu sein. Dabei bildet die erste Hauptposition der Trägerstruktur 14b die erste Funktionsstellung 18b der Fußstützvorrichtung 12b aus. Eine zweite Hauptstellung der Trägerstruktur 14b bildet die zweite Funktionsstellung 20b der Fußstützvorrichtung 12b aus. Dabei ist die erste Funktionsstellung 18b der Fußstützvorrichtung 12b als eine Verstaustellung ausgebildet. In der Verstaustellung ist die Fußstützvorrichtung 12b möglichst nah am Sitz 10b angeordnet und gibt einen Fußraum unter dem Sitz 10b frei. Dabei ist die Fußstützvorrichtung 12b in der als Verstaustellung ausgebildeten ersten Funktionsstellung 18b an eine Unter- und eine Rückseite des Sitzes 10b angeklappt. Die zweite Funktionsstellung 20b ist als eine Gebrauchsstellung ausgebildet. In der als Gebrauchsstellung ausgebildeten Funktionsstellung 20b ist die Fußstützvorrichtung 12b von dem Sitz 10b weggeklappt und kann von einem Passagier zur Bein- und/oder Fußauflage verwendet werden.

Die Trägerstruktur 14b umfasst ein rechtes Rahmenelement 28b und ein linkes Rahmenelement 80b. Die Rahmenelemente 28b, 80b sind aus einem federelastischen Material gebildet. Die Rahmenelemente 28b, 80b sind aus einem Rundstahl gebildet. Grundsätzlich wäre es auch denkbar, dass die Rahmenelenente lediglich teilweise aus einem federelastischen Material gebildet sind. Die beiden Rahmenelemente 28b, 80b sind beabstandet zueinander angeordnet. Zur Anbindung der Trägerstruktur 14b an den Sitz 10b weist die Sitzvorrichtung ein erstes Anbindungselement 26b und ein zweites Anbindungselement 82b auf. Die Anbindungselemente 26b, 82b binden jeweils eines der Rahmenelemente 28b, 80b an das als Gepäckstange ausgebildete Querelement 24b an. Dabei binden die Anbindungselemente 26b, 82b die Rahmenelemente 28b, 80b jeweils drehfest an das Querelement 24b an. Die Anbindungselemente 26b, 82b umschließen das Querelement 24b in einem montierten Zustand jeweils komplett. Die Anbindungselemente 26b, 82b umfassen jeweils zwei Grundkörper, die in einem montierten Zustand fest miteinander verbunden sind. Dabei sind die Grundkörper der Anbindungselemente 26b, 82b jeweils über Schrauben fest miteinander verbunden. Zur Anbindung an das Querelement 24b ist jedes Rahmenelement 28b, 80b der Trägerstruktur 14b jeweils zwischen den zwei Grundkörpern des Anbindungselements 26b, 82b, über die es an das Querelement 24b angebunden ist, eingeklemmt. Bei der Anbindung der Rahmenelemente 28b, 80b über die Anbindungselemente 26b, 82b umschließen die Rahmenelemente 28b, 80b das Querelement 24b nicht. Von der Anbindung an den Anbindungselementen 26b, 82b erstrecken sich die Rahmenelemente 28b, 80b jeweils nach oben in Richtung des als Tragrohr ausgebildeten Querelements 22b. Die Rahmenelemente 28b, 80b stützen sich jeweils mit einem ersten Ende an dem als Tragrohr ausgebildeten Querelement 22b ab.

Von den Anbindungselementen 26b, 82b aus erstrecken sich die Rahmenelemente 28b, 80b nach hinten in Richtung der Rückenlehne 34b. Dabei weisen die Rahmenelemente 28b, 80b jeweils einen Bogen 84b, 86b auf, der nach oben, in Richtung des Sitzbodens 36b ausgerichtet ist. Die Trägerstruktur 14b weist zwei Rahmenaufsätze 88b, 90b auf. Die Rahmenaufsätze 88b, 90b sind jeweils an einem hinteren Ende der Rahmenelemente 28b, 80b angeordnet. Die Rahmenaufsätze 88b, 90b sind dabei fest mit dem jeweiligen Rahmenelement 28b, 80b verbunden. Dabei sind die Rahmenaufsätze 88b, 90b auf die hinteren Enden der Rahmenelemente 28b, 80b aufgesetzt. Die Trägerstruktur 14b weist zwei Stützelemente 92b, 94b auf. Die Stützelemente 92b, 94b sind dazu vorgesehen, die Trägerstruktur 14b zu stabilisieren und zu versteifen. Die Stützelemente 92b, 94b sind mit einem ersten Ende jeweils an dem als hinteres Tragrohr ausgebildeten hinteren Querelement 44b angebunden. Grundsätzlich wäre es dabei auch denkbar, dass die Stützelemente 92b, 94b an die Rückenlehne 34b oder ein anderes Element der Rückenlehne 34b oder des Sitzbodens 36b angebunden sind. An einem zweiten Ende sind die Stützelemente 92b, 94b jeweils mit einem der Rahmenaufsätze 88b, 90b fest verbunden. Die Stützelemente 92b, 94b verbinden die Rahmenaufsätze 88b, 90b direkt mit dem hinteren Querelement 44b. Dabei sind die Stützelemente 92b, 94b jeweils verschwenkbar mit dem hinteren Querelement 44b verbunden. Grundsätzlich ist es auch denkbar, dass die Stützelemente 92b, 94b verschwenkbar mit den Rahmenaufsätzen 88b, 90b gekoppelt sind. Die Stützelemente 92b, 94b sind teleskopartig ausgebildet und können so in ihrer Länge verstellt werden. Grundsätzlich ist es auch denkbar, dass die Stützelemente 92b, 94b als einfache Gurtelemente ausgebildet sind, die die Rahmenaufsätze 88b, 90b mit dem als hinteres Tragrohr ausgebildeten hinteren Querelement 44b verbinden. Dabei ist es denkbar, dass die als Gurtelemente ausgebildeten Stützelemente 92b, 94b einen Einrollmechanismus aufweisen, die die als Gurtelemente ausgebildeten Stützelemente 92b, 94b immer auf Spannung halten und so die von einem Passagier gewünschte Länge aufweisen.

Die Fußstützvorrichtung 12b weist ein Fußstützelement 58b auf. Das Fußstützelement 58b ist dazu vorgesehen, eine Abstützfläche 60b für die Füße des Passagiers bereitzustellen, dem die Fußstützvorrichtung 12b zugeordnet ist. Das Fußstützelement 58b ist zwischen den beiden Rahmenaufsätzen 88b, 90b der Trägerstruktur 14b angeordnet. Das Fußstützelement 58b ist starr mit den Rahmenaufsätzen 88b, 90b verbunden. Dabei ist das Fußstützelement 58b jeweils über eine nicht näher dargestellte Schraubenverbindung fest mit dem jeweiligen Rahmenaufsatz 88b, 90b verbunden. Das Fußstützelement 58b verbindet die beiden Rahmenaufsätze 88b, 90b und damit die beiden Rahmenelemente 28b, 80b miteinander. Grundsätzlich ist es auch denkbar, dass das Fußstützelement 58b über eine Drehlagerung verschwenkbar mit den beiden Rahmenaufsätzen 88b, 90b verbunden ist.

Die Fußstützvorrichtung 12b weist ein Fuß- und/oder Beinablageelement 16b auf. Das Fuß- und/oder Beinablageelement 16b ist über die Trägerstruktur 14b an den Sitz 10b angebunden. Das Fuß- und/oder Beinablageelement 16b ist aus einem Netz gebildet. Das Fuß- und/oder Beinablageelement 16b ist als ein Fußnetz ausgebildet. Das Fuß- und/oder Beinablageelement 16b ist an seinen Seiten fest mit den Rahmenelementen 28b, 80b der Trägerstruktur 14b verbunden. Dabei ist das Fuß- und/oder Beinablageelement 16b über eine Verklebung fest mit den Rahmenelementen 28b, 80b verbunden. Grundsätzlich ist es auch denkbar, dass das Fuß- und/oder Beinablageelement 16b über Formschlusselemente form- und/oder kraftschlüssig mit den Rahmenelementen 28b, 80b verbunden ist. An einem hinteren Ende ist das Fuß- und/oder Beinablageelement 16b starr mit dem Fußstützelement 58b verbunden. Das Fuß- und/oder Beinablageelement 16b ist fest zwischen den Rahmenelementen 28b, 80b und dem Fußstützelement 58b angeordnet.

In einem unbelasteten Zustand ist die Fußstützvorrichtung 12b durch die gefederte Lagerung in der Verstaustellung. Die federelastischen Rahmenelemente 28b, 80b sind in dem unbelasteten Zustand in der als Verstaustellung ausgebildeten Funktionsstellung ausgerichtet und liegen an der Rückseite der Rückenlehne 34b an. Wird aus der als Verstaustellung ausgebildeten Funktionsstellung heraus von einem Passagier eine Kraft auf die Fußstützvorrichtung 12b ausgeübt, die in Richtung einer Aufständerebene gerichtet ist, schwenkt die Fußstützvorrichtung 12b nach unten, von der Rückenlehne 34b und dem Sitzboden 36b weg, wodurch ein Passagier seinen Fuß und/oder sein Bein auf dem Fuß-und/oder Beinablageelement 16b und/oder dem Fußstützelement 58b ablegen kann. Dabei werden die Rahmenelemente 28b, 80b so weit gebogen, bis die Stützelemente 92b, 94b ihre maximale Länge erreicht haben. Haben die Stützelemente 92b, 94b ihre maximale Länge erreicht, wird ein weiteres Verschwenken der Fußstützvorrichtung 12b verhindert und die Fußstützvorrichtung 12b hat ihre als Gebrauchsstellung ausgebildete Funktionsstellung 20b erreicht (siehe Figur 8). Bei der Verstellung werden die aus einem federelastischen Material gebildeten Rahmenelemente 28b, 80b verbogen und erzeugen dabei eine Rückstellkraft. Die Rückstellkraft sorgt dafür, dass die Fußstützvorrichtung 12b bei Wegfall der von dem Passagier ausgeübten Kraft wieder zurück in die als Verstaustellung ausgebildete Funktionsstellung gedrückt wird.

In der Figur 9 ist einer Sitzvorrichtung gezeigt. Die Sitzvorrichtung ist als eine Flugzeugsitzvorrichtung ausgebildet. Die als Flugzeugsitzvorrichtung ausgebildete Sitzvorrichtung ist Teil eines Sitzes 10c. Der Sitz 10c ist dabei als ein Flugzeugsitz ausgebildet. Der als Flugzeugsitz ausgebildete Sitz 10c ist in einem montierten Zustand auf einem Kabinenboden einer Flugzeugkabine eines Flugzeugs aufgeständert und dazu vorgesehen, dass ein Passagier während eines Flugs auf ihm sitzt. Der Sitz 10c umfasst eine Rückenlehne 34c und einen mit der Rückenlehne 34c gekoppelten Sitzboden 36c. Der Sitz 10c weist eine Aufständereinheit 38c auf, mittels der der Sitz 10c auf dem Kabinenboden aufgeständert ist. Der Sitz 10c umfasst ein vorderes Querelement 22c, das als ein vorderes Tragrohr ausgebildet ist, und ein hinteres Querelement 44c, das als ein hinteres Tragrohr ausgebildet ist.

Die Sitzvorrichtung umfasst eine Fußstützvorrichtung 12c. Die Fußstützvorrichtung 12c ist dazu vorgesehen, eine Bein- und/oder Fußablage für einen Passagier bereitzustellen. Dabei ist die Fußstützvorrichtung 12c an den als Flugzeugsitz ausgebildeten Sitz 10c angebunden. Die Fußstützvorrichtung 12c ist dazu vorgesehen, eine Fuß- und/oder Beinablage für einen hinter dem Sitz 10c, an dem die Fußstützvorrichtung 12c angebunden ist, angeordneten Sitz bereitzustellen. Ein auf dem hinteren Sitz sitzender Passagier kann auf der Fußstützvorrichtung 12c, die an dem vor ihm angeordneten Sitz 10c angebunden ist, seine Beine und/oder Füße abstützen. Die Fußstützvorrichtung 12c umfasst eine Trägerstruktur 14c. Die Trägerstruktur 14c ist zur Ausbildung von zumindest zwei Funktionsstellungen 20c der Fußstützvorrichtung 12c dazu vorgesehen, zwischen zwei Hauptpositionen bewegbar zu sein. Dabei bildet die erste Hauptposition der Trägerstruktur 14c die erste Funktionsstellung der Fußstützvorrichtung 12c aus. Eine zweite Hauptstellung der Trägerstruktur 14c bildet die zweite Funktionsstellung 20c der Fußstützvorrichtung 12c aus. Dabei ist die erste Funktionsstellung der Fußstützvorrichtung 12c als eine Verstaustellung ausgebildet. In der Verstaustellung ist die Fußstützvorrichtung 12c möglichst nah am Sitz 10c angeordnet und gibt einen Fußraum unter dem Sitz 10c frei. Dabei ist die Fußstützvorrichtung 12c in der als Verstaustellung ausgebildeten ersten Funktionsstellung an eine Unter- und eine Rückseite des Sitzes 10c angeklappt. Die zweite Funktionsstellung 20c ist als eine Gebrauchsstellung ausgebildet. In der als Gebrauchsstellung ausgebildeten Funktionsstellung 20c ist die Fußstützvorrichtung 12c von dem Sitz 10c weggeklappt und kann von einem Passagier zur Bein- und/oder Fußauflage verwendet werden. Die Trägerstruktur 14c umfasst ein rechtes Rahmenelement 28c und ein linkes Rahmenelement 80c. Die beiden Rahmenelemente 28c, 80c sind beabstandet zueinander angeordnet. Zur Anbindung der Trägerstruktur 14c an den Sitz 10c weist die Sitzvorrichtung ein erstes Anbindungselement 26c und ein zweites Anbindungselement 82c auf. Die Anbindungselemente 26c, 82c binden die Rahmenelemente 28c, 80c an das hintere Querelement 44c an. Die Anbindungselemente 26c, 82c sind dabei als Schwenklagerungen ausgebildet. Über die als Schwenklagerungen ausgebildeten Anbindungselemente 26c, 82c sind die Rahmenelemente 28c, 80c schwenkbar zu dem Sitz 10c gelagert. Zur Verstellung zwischen der als Verstaustellung ausgebildeten Funktionsstellung und der als Gebrauchsstellung ausgebildeten Funktionsstellung 20c werden die beiden Rahmenelemente 28c, 80c um eine Schwenkachse, die von den als Schwenklagerungen ausgebildeten Anbindungselementen 26c, 82c gebildet ist, zu dem Sitz 10c verschwenkt. Die Fußstützvorrichtung 12c weist ein Fußstützelement 58c auf. Das Fußstützelement 58c ist dazu vorgesehen, eine Abstützfläche 60c für die Füße des Passagiers bereitzustellen, dem die Fußstützvorrichtung 12c zugeordnet ist. Das Fußstützelement 58c ist zwischen den beiden Rahmenelementen 28c, 80c der Trägerstruktur 14c angeordnet. Dabei ist das Fußstützelement 58c an einem Ende der Rahmenelemente 28c, 80c angeordnet, das den Anbindungselementen 26c, 82c abgewandt ist. Das Fußstützelement 58c ist starr mit den Rahmenelementen 28c, 80c verbunden. Dabei ist das Fußstützelement 58c jeweils über eine nicht näher dargestellte Schraubenverbindung fest mit dem jeweiligen Rahmenelement 28c, 80c verbunden. Das Fußstützelement 58c verbindet die beiden Rahmenelemente 28c, 80c miteinander. Grundsätzlich ist es auch denkbar, dass das Fußstützelement 58c über eine Drehlagerung verschwenkbar mit den beiden Rahmenelementen 28c, 80c verbunden ist. Die Fußstützvorrichtung 12c weist ein Fuß- und/oder Beinablageelement 16c auf. Das Fuß- und/oder Beinablageelement 16c ist über die Trägerstruktur 14c an den Sitz 10c angebunden. Das Fuß- und/oder Beinablageelement 16c ist aus einem Netz gebildet. Das Fuß- und/oder Beinablageelement 16c ist als ein Fußnetz ausgebildet. Mit einem ersten Ende ist das Fuß- und/oder Beinablageelement 16c äquivalent zu dem Fuß- und/oder Beinablageelement aus dem ersten Ausführungsbeispiel der Figuren 1 bis 7 an dem vorderen Querelement 22c angebunden. An einem zweiten Ende ist das Fuß-und/oder Beinablageelement 16c mit dem Fußstützelement 58c verbunden. Dazu weist das Fuß- und/oder Beinablageelement 16c einen Anbindungsbereich 72c auf. Der Anbindungsbereich 72c ist dabei als eine Tasche ausgebildet. Das Fußstützelement 58c ist zur Anbindung des Fuß- und/oder Beinablageelements 16c in dem als Tasche ausgebildeten Anbindungsbereich 72c angeordnet, wodurch das Fuß- und/oder Beinablageelement 16c formschlüssig mit dem Fußstützelement 58c gekoppelt ist. Grundsätzlich ist es auch denkbar, dass der Anbindungsbereich 72c auf eine andere, dem Fachmann als sinnvoll erscheinende Weise ausgebildet ist und das Fuß- und/oder Beinablageelement 16c mit dem Fußstützelement 58c verbindet.

### Bezugszeichen

- 10: Sitz
- 12: Fußstützvorrichtung
- 14: Trägerstruktur
- 16: Fuß- und/oder Beinablageelement
- 18: Funktionsstellung
- 20: Funktionsstellung
- 22: Querelement
- 24: Querelement
- 26: Anbindungselement
- 28: Rahmenelement
- 30: Haltearm
- 32: Formschlusselement
- 34: Rückenlehne
- 36: Sitzboden
- 38: Aufständereinheit
- 40: Standbein
- 42: Verbindungselement
- 44: Querelement
- 46: Schwenklagerung
- 48: Grundkörper
- 50: Befestigungselement
- 52: Seitenwand
- 54: Aufnahmebereich
- 56: Aufnahme
- 58: Fußstützelement
- 60: Abstützfläche
- 62: Lagereinheit
- 64: Seite
- 66: Seite
- 68: Ende
- 70: Ausnehmung
- 72: Anbindungsbereich
- 74: Anbindungsbereich
- 76: Anbindungsbereich
- 78: Formschlusselement
- 80: Rahmenelement
- 82: Anbindungselement
- 84: Bogen
- 86: Bogen
- 88: Rahmenaufsatz
- 90: Rahmenaufsatz
- 92: Stützelement
- 94: Stützelement
- 96: Verdrehsicherung
- 98: Abstützelement
- 100: Formschlusselement
- 102: Abschlussplatte
- 104: Schraubenelement
- 106: Schraubenelement

## Patentansprüche

1. Flugzeugsitzvorrichtung, mit einem Sitz (10a) und mit einer Fußstützvorrichtung (12a), die wenigstens eine Trägerstruktur (14a) und ein über die Trägerstruktur (14a) an den Sitz (10a) angebundenes Fuß- und/oder Beinablageelement (16a) aufweist, in das ein Passagier sein Bein oder seinen Fuß hineinstellen kann, und dazu vorgesehen ist, für einen hinter dem Sitz (10a) angeordneten weiteren Sitz eine Bein- und/oder Fußablage bereitzustellen, wobei die Trägerstruktur (14a) zur Ausbildung von zumindest zwei Funktionsstellungen (18a; 20a) der Fußstützvorrichtung (12a) dazu vorgesehen ist, zwischen zwei Hauptpositionen bewegbar zu sein, wobei die Fußstützvorrichtung (12a) wenigstens ein Fußstützelement (58a) aufweist, das zumindest dazu vorgesehen ist, eine Abstützfläche (60a) für einen Fuß eines Passagiers bereitzustellen, wobei das Fuß- und/oder Beinablageelement (16a) an das Fußstützelement (58a) angebunden ist, wobei das Fuß- und/oder Beinablageelement (16a) dazu vorgesehen ist, über wenigstens ein Formschlusselement (32a, 78a) an den Sitz (10a) und/oder das Fußstützelement (58a) angebunden zu werden, wobei das Fußstützelement (58a) aus einem festen und biegesteifen Material gebildet ist, wobei die Trägerstruktur (14a) wenigstens einen Haltearm (30a) aufweist, der das Fußstützelement (58a) schwenkbar mit dem Sitz (10a) koppelt, **dadurch gekennzeichnet, dass** das Fußstützelement (58a) rotatorisch an den Haltearm (30a) angebunden ist.

2. Flugzeugsitzvorrichtung nach Anspruch 1, **dadurch gekennzeichnet, dass** die eine erste Funktionsstellung (18a) als eine Verstaustellung und die eine zweite Funktionsstellung (20a) als eine erste Gebrauchsstellung ausgebildet ist.

3. Flugzeugsitzvorrichtung nach einem der vorhergehenden Ansprüche, **dadurch gekennzeichnet, dass** das Fuß- und/oder Beinablageelement (16a) an ein vorderes Ende des Fußstützelements (58a) angebunden ist.

4. Flugzeugsitzvorrichtung nach einem der vorhergehenden Ansprüche, **dadurch gekennzeichnet, dass** das Fuß- und/oder Beinablageelement (16a) dazu vorgesehen ist, abnehmbar an die Fußstützvorrichtung (12a) montierbar zu sein.

5. Flugzeugsitzvorrichtung nach einem der vorhergehenden Ansprüche, **dadurch gekennzeichnet, dass** der Sitz (10a) ein vorderes Querelement (22a) aufweist, an dem die Fußstützvorrichtung (12a) angebunden ist.

## Claims

1. Aircraft seat device, with a seat (10a) and with a footrest device (12a) comprising at least one carrier structure (14a) and a foot and/or leg support element (16a) which is connected to the seat (10a) via the carrier structure (14a), which a passenger may put his leg or his foot into, the footrest device (12a) being configured to provide a leg and/or foot support for a further seat that is arranged behind the seat (10a), wherein for a realization of at least two functional positions (18a, 20a) of the footrest device (12a), the carrier structure (14a) is configured to be movable between two main positions,
the footrest device (12a) comprising at least one footrest element (58a), which is at least configured to provide a support surface (60a) for a passenger's foot,
wherein the foot and/or leg support element (16a) is connected to the footrest element (58a), wherein the foot and/or leg support element (16a) is configured to be connected to the seat (10a) and/or to the footrest element (58a) via at least one form-fit element (32a, 78a), wherein the footrest element (58a) is made of a solid, flexurally rigid material,
the carrier structure (14a) comprising at least one holding arm (30a) which couples the footrest element (58a) with the seat (10a) in a pivotable manner, **characterised in that** the footrest element (58a) is rotationally connected to the holding arm (30a).

2. Aircraft seat device according to claim 1,
**characterised in that** the one first functional position (18a) is realized as a stowage position and the one second functional position (20a) is realized as a first usage position.

3. Aircraft seat device according to one of the preceding claims,
**characterised in that** the foot and/or leg support element (16a) is connected to a front end of the footrest element (58a).

4. Aircraft seat device according to one of the preceding claims, **characterised in that** the foot and/or leg support element (16a) is configured to be mountable to the footrest device (12a) such that it is removable.

5. Aircraft seat device according to one of the preceding claims, **characterised in that** the seat (10a) comprises a front transversal element (22a) which the footrest device (12a) is connected to.

## Revendications

1. Dispositif de siège d'avion, avec un siège (10a) et avec un dispositif appuie-pied (12a) comprenant au moins une structure porteuse (14a) et un élément de support de pied et/ou de jambe (16a) qui est raccordé au siège (10a) par le biais de la structure porteuse (14a) et dans lequel un passager peut mettre sa jambe ou son pied, le dispositif appuie-pied (12a) étant configuré à pourvoir un support de pied et/ou de jambe pour un autre siège qui est agencé derrière le siège (10a),
où pour la réalisation d'au moins deux positions fonctionnelles (18a, 20a) du dispositif appuie-pied (12a), la structure porteuse (14a) est configurée à être mouvable entre deux positions principales,
le dispositif appuie-pied (12a) comprenant au moins un élément appuie-pied (58a) qui est au moins configuré à pourvoir une surface de support (60a) pour un pied d'un passager,
l'élément de support de pied et/ou de jambe (16a) étant raccordé à l'élément appuie-pied (58a),
l'élément de support de pied et/ou de jambe (16a) étant configuré à être raccordé au siège (10a) et/ou à l'élément appuie-pied (58a) via au moins un élément de liaison en forme (32a, 78a),
où l'élément appuie-pied (58a) est formé d'un matériau solide et rigide en flexion, où la structure porteuse (14a) comprend au moins un bras de retenue (30a) couplant l'élément appuie-pied (58a) avec le siège (10a) de façon pivotant, **caractérisé en ce que** l'élément appuie-pied (58a) est raccordé au bras de retenue (30a) de façon rotative.

2. Dispositif de siège d'avion selon la revendication 1,
**caractérisé en ce que** la première position fonctionnelle (18a) est réalisé comme position de rangement et la deuxième position fonctionnelle (20a) est réalisé comme une première position d'usage.

3. Dispositif de siège d'avion selon l'une des revendications précédentes, **caractérisé en ce que** l'élément de support de pied et/ou de la jambe (16a) est raccordé à une extremité avant de l'élément appuie-pied (58a).

4. Dispositif de siège d'avion selon l'une des revendications précédentes, **caractérisé en ce que** l'élément de support de pied et/ou de la jambe (16a) est configuré d'une telle manière qu'il peut être monté sur le dispositif appuie-pied (12a) de façon amovible.

5. Dispositif de siège d'avion selon l'une des revendications précédentes, **caractérisé en ce que** le siège (10a) comprend un élément avant transversal (22a) auquel le dispositif appuie-pied (12a) est raccordé.
